# EUROPEAN PATENT APPLICATION

(11) **EP 3 726 424 A1**
(43) Date of publication of application: **21.10.2020**
(21) Application number: 20165902.6
(22) Date of filing: 26.03.2020
(51) Int. Cl.: G06K 9/00, G06T 7/00, G06Q 50/00

(54) **DETERMINATION OF AUDIENCE ATTENTION**

(30) Priority: 27.03.2019 US 201916366375
(71) Applicant: AGT Global Media GmbH, 8050 Zurich (CH)
(72) Inventor: MANDE, Rohit, 411046 Pune (IN); SCHLATTMANN, Markus, 64347 Griesheim (DE); DIENER, Stefan, 64839 Muenster (DE)
(74) Representative: Taor, Simon Edward William

(57) **Abstract**

There is provided a computerized method for determining attention of an audience individual. The method comprises receiving a tracked sequence of an individual's attention directions, where the tracked sequence is indicative of a direction of attention of the one audience individual in each frame of a first subset of a first series of frames. The first series of frames are associated with a time interval. The method also comprises receiving a motion trajectory of a moving object, which is indicative of a location of a moving object in each frame of a second subset of a second series of frames. The second series of frames are associated with a second time interval that corresponds to the first time interval. The method further comprises processing the tracked sequence and the motion trajectory for determining an attention score of the audience individual towards the moving object.

## Description

### TECHNICAL FIELD

The presently disclosed subject matter relates to audience behaviour during events and, more particularly, to determining attention of the audience during public events.

### BACKGROUND

Public events, such as exhibitions, fairs, fashion shows and sports events, involve the participation of an audience, i.e. a group of people, watching a scene. In certain events, the audience is assembled in an audience area, while watching the scene. The scenes to which the audience is exposed can be various, and may have, for instance, a steady content, such as a film on a screen, as in a movie theatre. However, the scene can be dynamic or active, such as moving objects, as in the example of actors on a stage in a show, basketball players in an arena in a basketball sports event, or models walking on a runway in a fashion show. In fashion shows, for example, the audience is assembled in an audience area and is watching the models walking on a runway representing the scene area.

Various methods of gathering information of the event and the audience's interest in the activity in the scene during the event, are known. One such method is collecting rates given by individuals of the audience, on content that was presented during the event, and accumulating the rates to obtain an overall attention record of the audience of the content presented during the event. Based on the overall attention record, it is possible to provide a rate of the event, and to indicate, based on this rate, if the event was successful or not.

### GENERAL DESCRIPTION

In dynamic events like fashion shows or sports events, where the audience is watching moving objects such as models or players, obtaining information on the interest of the audience during the event, in an accurate manner, which does not involve receiving the audience's active input on the event, is beneficial, for example, to organizers of such events.

Moreover, obtaining information on the interest of the audience towards specific objects, or even parts of such objects, is even more valuable, as the interest of the watched scene can be measured in a more accurate manner, while evaluating the objects that contributed to the success of the event, in terms of the audience's interest in these objects during the event.

According to one aspect of the presently disclosed subject matter there is provided a computerized method for determining attention of at least one audience individual, the method comprising:
receiving at least one tracked sequence of an individual's attention directions, the at least one tracked sequence being indicative of a direction of attention of the at least one audience individual in each frame of a subset of a first series of frames, the first series of frames being associated with a first time interval;
receiving a motion trajectory of a moving object, the motion trajectory being indicative of a location of the moving object in each frame of a second subset of a second series of frames, the second series of frames being associated with a second time interval that corresponds to the first time interval; and
processing the tracked sequence and the motion trajectory for determining an attention score of the at least one audience individual towards the moving object.

In addition to the above features, the method according to this aspect of the presently disclosed subject matter can comprise one or more of features (i) to (x) listed below, in any desired combination or permutation which is technically possible:
(i). the computerized method wherein the method further comprises:
   receiving data relating to a new frame;
   detecting, in the new frame at least one face associated with at least one audience individual;
   determining a direction of attention of the at least one audience individual in the new frame;
   updating the at least one tracked sequence associated with the detected face to include indication of the determined direction of attention; and
   processing the updated tracked sequence and the motion trajectory for determining an attention score of the at least one audience individual towards the moving object.
(ii). the computerized method wherein the attention score is dependent on whether the direction of attention in one or more frames of the first series of frames is directed towards the location of the moving object in one or more corresponding frames of the second series of frames.
(iii). the computerized method wherein determining the attention score of the at least one audience individual towards the moving object further comprises:
   for each frame of the first series of frames, determining one or more frame attention scores; and
   aggregating the determined one or more frame attention scores to determine the attention score.
(iv). the computerized method further comprising:
   receiving at least one additional tracked sequence of at least one additional individual's attention directions, the at least one tracked sequence being indicative of a direction of attention of the at least one additional audience individual in each frame of the subset of the first series of the frames;
   processing the additional tracked sequence and the motion trajectory for determining at least one additional attention score of the at least one audience individual towards the moving object; and
   aggregating the determined attention scores of the audience individuals to obtain an audience attention score.
(v). the computerized method wherein the first series of frames is received from at least one audience camera and wherein the second series of frames is obtained from at least one camera, the at least one camera is calibrated to the at least one audience camera to determine relative position of each other.
(vi). the computerized method further comprising:
   receiving position information related to at least one of an angle of view of the audience camera and an angle of view of the object camera;
   wherein processing the tracked sequence and the motion trajectory is based at least on the received position information.
(vii). the computerized method, wherein determining the direction of the attention of the audience individual in the new frame includes:
   obtaining a head pose of the audience individual, the head pose being indicative of the attention of the audience individual.
(viii). the computerized method, wherein detecting, in the new frame, of at least one face, includes: detecting at least one face shape in the new frame.
(ix). the computerized method, wherein detecting, in the new frame of at least one face, includes:
   receiving data relating to an estimated location of at least one face in the new frame, the estimated location being indicative of a position of a previously detected face in another frame;
   in response to detecting a face shape in the new frame based on the estimated location, determining whether a position of the detected face shape is within a predetermined divergence threshold from the position of the previously detected face;
   if the position of the detected face shape is within the predetermined divergence threshold, recognizing a correspondence between the detected face shape and the previously detected face and determining the direction of attention of the at least one audience individual in the new frame.
(x). the computerized method, wherein the method further comprises:
   receiving data relating to a new frame,
   receiving data relating to an estimated location of at least one face in the new frame, the estimated location is indicative of a position of a previously detected face in another frame; and
   in response to failure to detect a face shape in the new frame based on the estimated location:
      updating the at least one tracked sequence associated with the previously detected face to indicate a failure of direction of attention of the at least one audience individual in the new frame; and
      processing the updated tracked sequence and the motion trajectory for determining an attention score of the at least one audience individual towards the moving object.

According to another aspect of the presently disclosed subject matter there is provided a computerized method for determining a frame attention score of at least one audience individual, the method comprising:
a) detecting, in a received frame at least one face associated with at least one audience individual, wherein the frame is associated with a first time tag;
b) determining a direction of attention of the at least one audience individual that is associated with the detected face in the frame;
c) receiving a location of a moving object, the location being associated with a second time tag that corresponds to the first time tag;
d) processing the direction of attention and the location of the moving object for determining a frame attention score of the at least one audience individual towards the moving object.

This aspect of the disclosed subject matter can comprise one or more of features (i) to (x) listed above with respect to the system, *mutatis mutandis,* in any desired combination or permutation which is technically possible.

In addition to the above features, the method according to this other aspect of the presently disclosed subject matter can comprise one or more of features (xi) to (xiv) listed below, in any desired combination or permutation which is technically possible:
(xi). the computerized method, wherein the frame is of a series of frames associated with a first time interval, wherein the method further comprises:
   repeating steps (a) to (d) in a subset of frames of the series of frames, for the one or more detected faces to obtain a series of frame attention scores of the at least one audience individual towards the moving object;
   aggregating the obtained series of frame attention scores to obtain an attention score of the at least one audience individual towards the moving object.
(xii). the computerized method, wherein the method further comprises:
   receiving more than one obtained attention score of more than one audience individual towards the moving object; and
   aggregating the more than one obtained attention scores of the audience individuals to obtain an audience attention score towards the moving object.
(xiii). the computerized method, wherein the method comprises:
   repeating steps (a) to (d) for at least one additional face associated with at least one additional audience individual detected in the frame to determine at least one additional frame attention score of the at least one additional audience individual towards the moving object, and
   aggregating the determined frame attention score and the at least one additional frame attention score to obtain an audience frame attention score towards the moving object.
(xiv). the computerized method, wherein the frame is received from at least one audience camera and wherein the location of the moving object is obtained from at least one object camera, the at least one object camera being calibrated to the at least one audience camera to determine relative position of each other.

According to another aspect of the presently disclosed subject matter there is provided a computerized system for determining the attention of at least one audience individual, the system comprising:
one or more processors; and
a memory coupled to the one or more processors and storing program instructions that, when executed by the one or more processors, cause the one or more processors to at least:
   receive at least one tracked sequence of an individual's attention directions, the at least one tracked sequence being indicative of a direction of attention of the at least one audience individual in each frame of a subset of a first series of frames, the first series of frames being associated with a first time interval;
   receive a motion trajectory of a moving object, the motion trajectory being indicative of a location of the moving object in each frame of a second subset of a second series of frames, the second series of frames being associated with a second time interval that corresponds to the first time interval;
   process the tracked sequence and the motion trajectory for determining an attention score of the at least one audience individual towards the moving object.

According to another aspect of the presently disclosed subject matter there is provided a computerized system for determining the attention of at least one audience individual, the system comprising:
one or more audience sensors configured for capturing one or more faces of one or more individuals of the audience;
one or more object sensors configured for capturing movement of one or more moving objects;
a computing device comprising:
   a detecting module configured to receive data relating to a new frame from the one or more audience sensors and to detect in the new frame at least one face associated with at least one audience individual;
   a determining direction module configured to determine a direction of attention of the at least one audience individual that is associated with the detected face in the new frame;
   an updating module configured to update the at least one tracked sequence associated with the detected face to include indication of the direction of attention of the at least one audience individual in the new frame;
   a determining score module configured to process the updated tracked sequence and the motion trajectory for determining an attention score of the at least one audience individual towards the moving object.

According to another aspect of the presently disclosed subject matter there is provided a computerized program storage device readable by machine, tangibly embodying a program of instructions executable by the machine to perform a method for determining the attention of at least one audience individual, the method comprising:
receiving at least one tracked sequence of the individual's attention directions, the at least one tracked sequence being indicative of a direction of attention of the at least one audience individual in each frame of a subset of a first series of frames, the first series of frames being associated with a first time interval;
receiving a motion trajectory of a moving object, the motion trajectory being indicative of a location of the moving object in each frame of a second subset of a second series of frames, the second series of frames being associated with a second time interval that corresponds to the first time interval;
processing the tracked sequence and the motion trajectory for determining an attention score of the at least one audience individual towards the moving object.

According to another aspect of the presently disclosed subject matter there is provided a computerized computer program product comprising a computer useable medium having computer readable program code embodied therein for determining the attention of at least one audience individual, the computer program product comprising:
computer readable program code for causing the computer to receive at least one tracked sequence of an individual's attention directions, the at least one tracked sequence being indicative of a direction of attention of the at least one audience individual in each frame of a subset of a first series of frames, the first series of frames being associated with a first time interval;
computer readable program code for causing the computer to receive a motion trajectory of a moving object, the motion trajectory being indicative of a location of the moving object in each frame of a second subset of a second series of frames, the second series of frames is associated with a second time interval that corresponds to the first time interval;
computer readable program code for causing the computer to process the tracked sequence and the motion trajectory for determining an attention score of the at least one audience individual towards the moving object.

The above aspects of the disclosed subject matter can comprise one or more of features (i) to (xiv) listed above with respect to the system, *mutatis mutandis,* in any desired combination or permutation which is technically possible.

### BRIEF DESCRIPTION OF THE DRAWINGS

In order to understand the invention and to see how it can be carried out in practice, embodiments will be described, by way of non-limiting examples, with reference to the accompanying drawings, in which:
**Fig. 1** illustrates a high level functional block diagram environment for implementing detection of audience attention during an event in accordance with certain embodiments of the presently disclosed subject matter;
**Fig. 2** illustrates an example of a computing device, such as a computing device illustrated in the environment of FIG. **1****;**
**Fig. 3** illustrates examples of stored records of tracked sequences of individuals;
**Fig. 4** illustrates a generalized flow-chart of operations carried out in order to determine a direction of attention in a new frame in accordance with certain embodiments of the presently disclosed subject matter;
**Fig. 5** illustrates a generalized flow-chart of operations carried out in order to detect a face in a new frame in accordance with certain embodiments of the presently disclosed subject matter;
**Fig. 6** illustrates an example of a flow-chart of operations carried out in order to determine a direction of attention of a face of an audience individual;
**Fig. 7** illustrates an exemplary detection of points on a face;
**Fig. 8** illustrates a generalized flow-chart of operations carried out in order to determine an attention score in accordance with certain embodiments of the presently disclosed subject matter;
**Fig. 9** illustrates a generalized flow-chart of operations carried out in order to determine a frame attention score in accordance with certain embodiments of the presently disclosed subject matter; and
**Fig. 10** illustrates a generalized flow-chart **1000** of operations carried out in order to determine a frame attention score of an audience individual in accordance with certain embodiments of the presently disclosed subject matter.

### DETAILED DESCRIPTION

Success of public events can be measured, inter alia, by the interest of the audience during the event in the scene, and the dynamic content that was presented during the event in the scene area.

The interest of the audience can be assessed, among others, based on the attention of each individual of the audience towards moving objects on the scene. It can be assumed that the longer the attention of an individual directed to the moving objects, the higher his interest. Moreover, if the attention of an individual is directed towards a certain part of an object which is a part of the scene, it can be assumed that that part of the object is of interest to the individual. Consider, for example, a fashion show, in which the audience is watching several models walking on a runway. The attention of individuals of the audience during the fashion show towards each model and towards specific aspects of an outfit of a model, e.g. attention to the front or back of an outfit, can indicate the general interest of the individual during the event.

One challenge in obtaining information on the audience's interest in an event in an objective and measureable manner, is how to map the attention of individuals of the audience towards a moving object. This challenge is even enhanced, when more than one moving object is involved in the scene, and it is desired to obtain information on the interest of individuals towards each of the moving objects, or towards specific aspects of the moving objects in the scene, such as the front or back of an outfit of the model, as previously mentioned.

Some known approaches focus on estimating the attention of a single person with a dedicated camera to a steady object only, e.g. a steady TV screen. Other known systems use prior knowledge of the presented content, such as using the pre-defined location of each object during an upcoming event. These systems map the direction of attention of individuals towards known locations, and then deviate the degree of attention given to each location, and then to each object. Other systems use manual input from the audience on attention to each object during the event, which reduces the level of objectiveness of the input.

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "receiving", "processing", "computing", "detecting", "determining", "updating", "aggregating", "obtaining", "identifying", "repeating", "comparing", "generating", "storing", "indicating", "assessing", "placing", "recognizing", or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, computing device **140** disclosed in the present application.

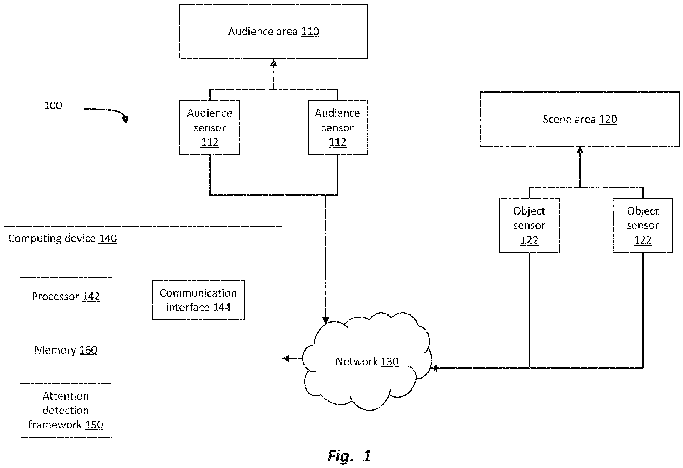

The terms "non-transitory memory" and "non-transitory storage medium" used herein should be expansively construed to cover any volatile or non-volatile computer memory suitable to the presently disclosed subject matter. The operations in accordance with the teachings herein may be performed by a computer specially constructed for the desired purposes or by a general-purpose computer specially configured for the desired purpose by a computer program stored in a non-transitory computer-readable storage medium, such as memory **160** illustrated in Figs **1****,** **2** **and** **3** below.

Bearing this in mind, attention is drawn to **Fig. 1** illustrating a high level functional block diagram environment **100** for implementing detection of audience attention during an event in accordance with certain embodiments of the presently disclosed subject matter.

Environment **100** includes audience area **110** in which audience individuals are located. Near the audience area is the scene area **120.** Scene area **120** can be viewed from audience area **110.** In the example of a sports event, the scene area is the arena of the players, while in the example of a fashion show, the scene area is the runway that the models walk on.

Environment **100** also includes one or more audience sensors **112.** Audience sensors **112** are positioned near the scene area and can include one or more sensors for capturing a general front view of faces of individuals of the audience, e.g. by means of an axis camera. In addition to one audience sensor being capable of capturing a general front view of faces of individuals, audience sensors **112** can also include other types of sensors, such as audio sensors, video cameras, stereo cameras, infrared cameras, depth cameras, laser scanning devices, radio frequency arrays, GPS sensors, other wearable sensors and such, for capturing additional data on the audience. In some examples of a dark audience area, an IR light source may be used as video captured without IR mode, which may not be suitable for analytics.

In some cases, data sensed from audience sensors **112** includes a view of one or more faces of audience individuals located in the audience area **110** and may be associated with a certain time interval comprised of several frames. In each frame, the view can include a snapshot of one or more faces of audience individuals. In some examples, when inspecting each face individually, a head pose of the individual can be estimated, where the head pose may be indicative of the direction of attention of the audience individual. For example, if the head pose of the person is down, it can be assumed that the individual's attention is directed to other content than that which is presented on the scene, e.g. his cellphone.

In addition to audience sensors **112,** environment **100** also includes one or more object sensors **122.** Object sensors **122** are positioned near the scene area **120** and can capture the movement of the moving object in scene area **120** for a certain time interval, that corresponds to the time interval captured by the audience sensors **112.** For this purpose, two time intervals would be considered as corresponding to each other, if both time intervals include a specific given time which was captured by both sensors. For example, audience sensors **112** capture a video that lasts **5** minutes, and object sensors **122** capture a video that lasts **1** minute, but that **1** minute captured by object sensors, or a part thereof, will be at the same that the **5**-minute video was taken, such that the overlapping time in the **5**-minute video and **1** minute video will be the corresponding time interval. In order to detect if an individual attention's is directed towards the moving object, it is required that the attention direction of the individual be detected at a corresponding time to that of movement of the object.

Some examples of object sensors are a Kinect depth sensor for capturing moving data of moving objects, movement sensors, video cameras, stereo cameras, infrared cameras, depth cameras, laser scanning devices, radio frequency arrays, GPS sensors, other wearable sensors, and such. In the example of a basketball sports event, object sensors **122** can include a depth camera for capturing the players, GPS sensor for capturing the location of the ball, which is also a moving object, and pressure sensors on the mat for obtaining additional position information which can also be used in detecting the movement of the players, as will be elaborated below. A person versed in the art would realize that any type of sensor which is capable of obtaining a proximate location of a moving object, can be used as object sensor **122.**

In some examples, data sensed from object sensors **112** may be processed to obtain a motion trajectory of the moving object, indicative of a location of the moving object in the scene area **120** in a corresponding time interval to the time interval captured by the audience sensors **112.** Processing of the sensed data from object sensors can be done, e.g. by a processor (not shown) coupled to or communicatively connected to object sensors **112** e.g. using radio signal triangulation, such as Bluetooth beacons or ultra wide band. In some cases, more than one moving object may be indicative of the location of the moving object in each frame in the scene area **120** and the data sensed from object sensors **112** may be processed to obtain more than one motion trajectory of more than one moving object, where each moving object may be associated with a corresponding moving trajectory. The motion trajectory of the series of frames may be captured by the object sensors **112,** or a subset of that series, if, for example, the data sensed by object sensors **112** was sensed for a longer time period than the time that the moving object appeared on scene area **120.**

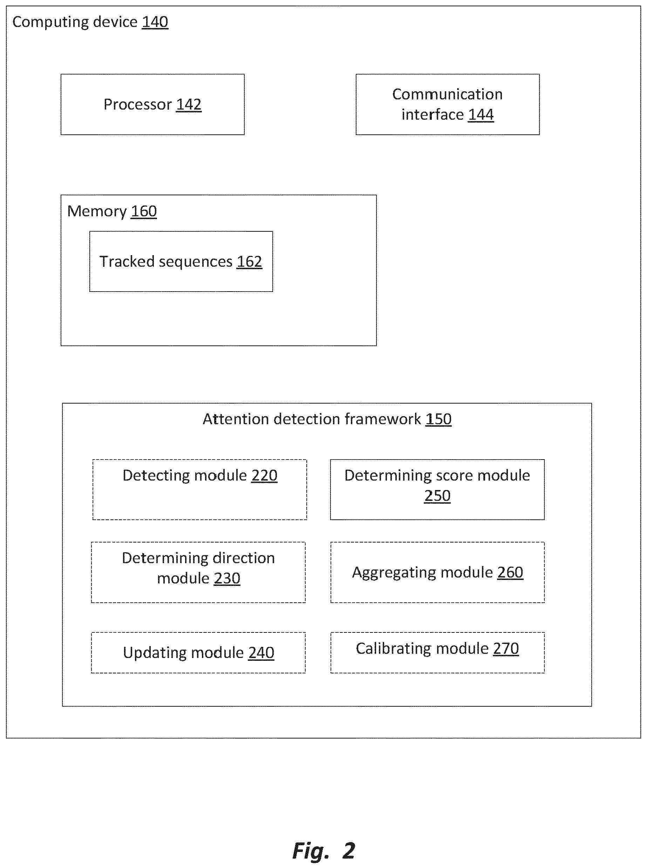

In some cases, the audience area **110** captured by the audience sensors **112** and the scene area **120** captured by object sensors **122** are calibrated to each other, to determine relative position of each other. Further details of the calibration of the two areas is further detailed below in Fig. **2****.**

As illustrated in FIG. **1****,** audience sensors **112** and object sensors **122** are communicatively connected to computing device **140.** The communication between audience sensors **112** and object sensors **122** and between computing device **140** can be facilitated over one or more types of communication networks **130.** For example communication networks **130** can include any one of: the Internet, local area network (LAN), wide area network (WAN), metropolitan area network (MAN), various types of telephone networks (including for example PSTN with DSL technology) or mobile networks (including for example GSM, GPRS, CDMA etc.), or any combination thereof. Communication within the network can be realized through any suitable connection (including wired or wireless) and communication technology or standard (WiFi, **3G,** LTE, etc). The various computer devices in environment **100** are operable to communicate over the network communication links.

In some examples, the data sensed from audience sensors **112** and object sensors **122** may be transmitted to computing device **140,** e.g. using network **130.** Computing device **140** has at least one processor **142,** a communication interface **144,** a memory **160,** and an attention detection framework **150.** Although only one processor **142** and one memory **160** are illustrated, there may be multiple processors **142,** multiple memory devices **144,** or both.

In some cases, computing device **140** receives sensed data from audience sensors **112** and object sensors **122,** and processes the data to determine an attention score of audience individuals towards the captured moving object. In some examples, the attention score may be dependent on whether the direction of attention of each audience individual in one or more frames of the series of frames captured by the audience sensors **112** is directed towards the location of the moving object in one or more corresponding frames captured by the object sensors **122.** For example, if the individual's attention is directed toward the moving object during most of the captured time, then the attention score can be determined to be high, and vice versa.

Referring to **Fig. 2****,** there is illustrated an example of a computing device, such as a computing device illustrated in environment **100** of FIG. **1****.** As explained with reference to Fig. **1** above, computing device **140** has at least one processor **142,** at least one memory **160,** a communication interface **144** and attention detection framework **150.**

Computing device **140** can receive data sensed from audience sensors **112** and object sensors **122,** e.g. through communication interface **144,** and processes the data to determine an attention score of audience individuals towards the captured moving object, e.g. using attention detection framework **150.** In some cases, the data sensed by audience sensors **112** and object sensors **122** may be pre-processed, e.g. to obtain a motion trajectory of a moving object from data sensed by object sensors **122,** and only then the processed data may be received by computing device **140.** In some examples, attention detection framework **150** includes a detecting module **220,** a determining direction module **230,** an updating module **240,** a determining score module **250,** an aggregating module **260,** and a calibrating module **270.**

In some cases, where the audience sensors **112** and the object sensors **122** include one or more cameras, calibrating module **270** may be configured to calibrate the angles of view of the cameras to get the geometric position of audience area **110** with reference to the scene area **120.** Calibration may be required for example, in order to determine if a certain position on scene area **120** is in front, or left or right of a certain position in audience area **110,** in order to better determine the attention direction of the audience individual towards the moving object at a later stage. Hence, in some cases, calibrating module **270** can map all positions in audience area **110** to all positions on scene area **120,** e.g. by dividing the audience area into a fixed number of non-overlapping neighbouring rectangular regions e.g. **16** and similarly dividing scene area **120** into a fixed number of regions e.g. **16** and creating mapping for each region. Calibrating module **270** can create a **16**^{∗}**16** map with value at each position corresponding to relative position of scene area **120** with reference to audience area **110.** This value can be represented in various ways, such as an angle, a value in the range of **1** to **5** based on angle, or a text value like left/front/right which indicates if scene area **120** is to the left/front/right with reference to the audience region. In some case, calibrating module **270** can receive additional position information related to either or both the angle of view of the audience camera **112** and the angle of view of the object camera **122,** and use the additional position information in order to calibrate the angles of views. Examples of additional position information include information on direction of start and end of scene (for example, a runway in a fashion show has a beginning and an end), audience area is to the right/left of the scene, overall length of the areas, etc.

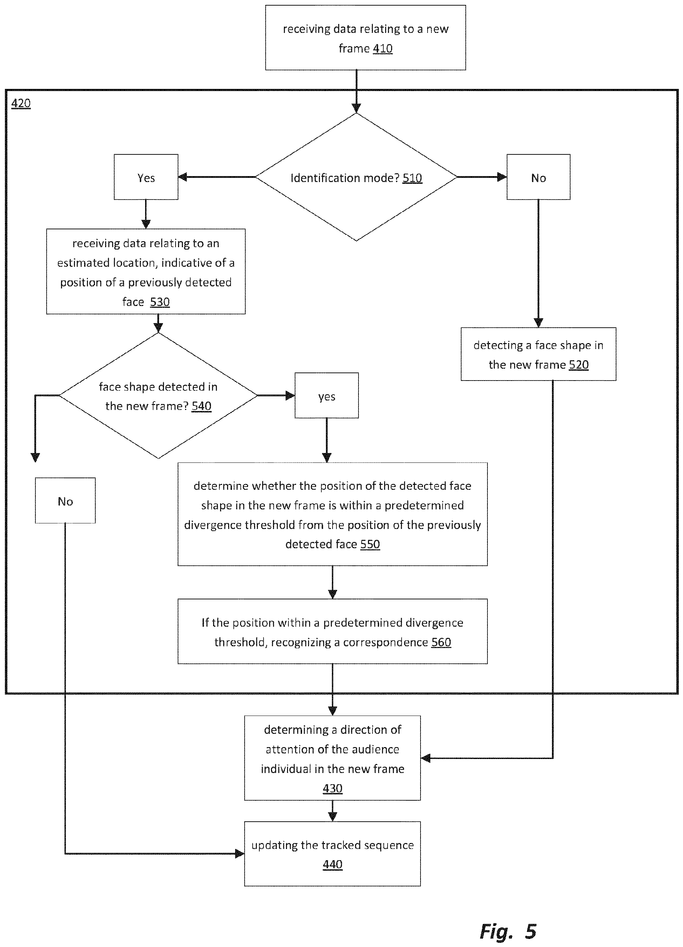

In some cases, the data that was sensed by audience sensors **112** can be received by computing device **140,** e.g. by detecting module **220.** The sensed data can include a sequence of frames. Detecting module **220** may be configured to receive the frames and detect, in a single frame, the face of an audience individual. In some cases, detecting module **220** can detect more than one face of more than one audience individual in a single frame. The detected face may then be transmitted to determining direction module **230** for determining a direction of attention of the individual that may be associated with the detected face. In some examples, determining direction module **230** may be configured to obtain a head pose of the individual in the frame, where the head pose may be indicative of the attention of the audience individual. For example, if the head pose of the person is down, it can be assumed that the individual's attention is directed to content other than that which is presented on the scene, e.g. his cellphone. The process of determining an attention direction of an individual associated with a detected face, as executed e.g. by determining direction module **230,** is elaborated below, with respect to Figs. **5-7****.**

As explained above, in some examples, where the audience sensors 112 include a camera and the object sensors **122** include a camera, calibrating module **270** calibrates the angles of views of the cameras to determine relative position of each other. Optionally, calibrating module **270** uses additional position information for the calibration process. In such cases, determining direction module **230** can receive position information, e.g. from calibrating module **270,** and determine the direction of attention of the individual that may be associated with the detected face, based, among others, on the position information.

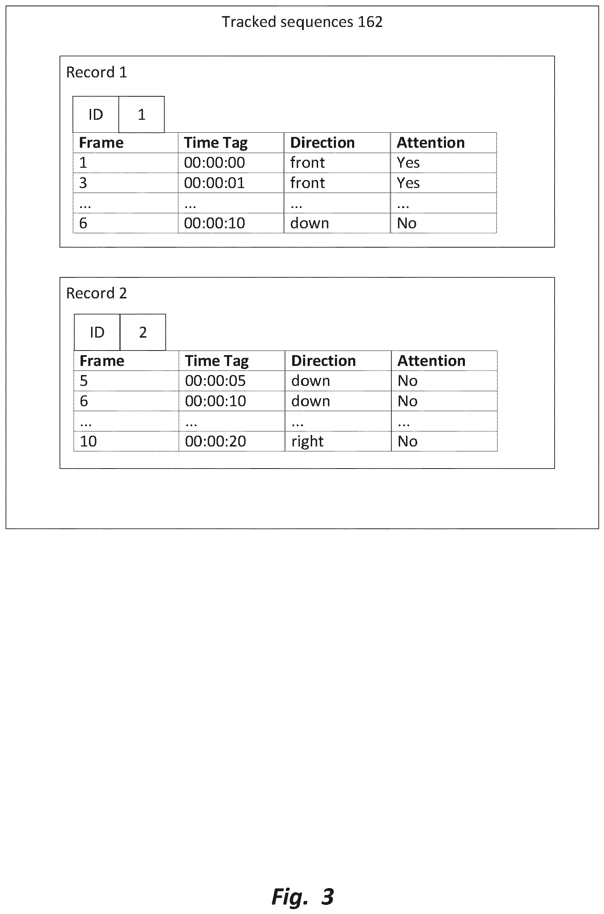

In some cases, for each detected face associated with an audience individual, a tracked sequence of individual's attention directions may be generated and stored, e.g. in memory **160.** The tracked sequence of individual's attention directions may be indicative of a direction of attention of the audience individual in each frame of a series of frames captured by audience sensors **112,** or a subset of this series. Fig. **3** illustrates examples of records of tracked sequences of individuals **162** stored in memory **160.** As illustrated in Fig. **3****,** tracked sequences **162** includes two exemplary records, Record **1** and Record **2.** Each record includes an ID field, identifying an audience individual associated with a detected face and a list of frames, each frame associated with a time tag indicating when the frame was taken. For each frame, a direction of attention may be indicated. As illustrated, Record **1,** representing a tracked sequence of individual's attention directions, is associated with an audience individual. Record **1** includes an ID field with the number **1.** The record also includes a list of frames, where it is shown that in frame **1** sensed from audience sensors **112** at time **00:00:00,** the direction of attention of audience individual **1** was to the front, while in frame **6,** the direction of attention of audience individual **1** was down. The direction of attention can be determined e.g. based on determining direction module **230** illustrated in Fig **.2** above. It should be noted that the direction 'front' does not necessarily mean that the attention of audience individual **1** was directed towards the moving object on scene area **120,** as it can be that the seat of audience individual **1** may be to the left of scene area **120,** and that the location of the moving object at time tag **00:00:00** was on the right side of the scene area **120.** Thus, in order for the attention of audience individual **1** to be towards the moving object in scene area **120,** the direction of audience individual **1** at that frame should have been to the right. In a similar way, direction 'down' does not necessarily means that there was no attention of audience individual **1,** since there may be cases where, in the exact frame, there was no moving object on scene area **120.** Therefore it may be noted that direction field in Record **1** includes the direction of the face of audience individual **1,** and not whether the direction may be towards the moving object. Each record also includes an 'Attention' field, indicative of whether the attention of the audience may be directed towards the moving object. Obtaining the value to be inserted in this field is further described below.

Also to be noted from exemplary tracked sequences **162** may be that Record **2** represents a tracked sequence of individual's attention directions, associated with audience individual **2.** Record **2** may be associated with different time tags than that in Record **1,** although, in some cases, Record **1** and Record **2** were generated based on the same sequence of frames captured by audience sensors **112.** A person versed in the art would realize that Records 1 and 2 are provided as examples only, and should not be limited to the illustrated exemplary structure.

Referring back to Fig. **2****,** once determining direction module **230** determines the direction of attention of the individual, updating module **240** may be configured to either generate and store a tracked sequence, if no tracked sequence was generated up till now for the detected face, or update a tracked sequence associated with the detected face to include an indication of the direction of attention in the frame. For example, updating module **240** generates and stores or updates Record **1** illustrated in Fig. **3****.**

Determining score module **250** may be configured to receive a tracked sequence of individual's attention directions, e.g. Record **1,** where the tracked sequence may be indicative of a direction of the attention of an audience individual in each frame of a series of frames in a certain time interval, or a subset of that series. In some cases, determining score module **250** may be configured to receive a tracked sequence of more than one audience individual.

In addition, determining score module **250** may be configured to receive a motion trajectory, e.g. by receiving the data sensed by object sensors **122** or processed data sensed by object sensors **122,** and to determine an attention score of the audience individual towards the moving object. In some cases, the attention score may be dependent on whether the direction of the attention of the individual in one or more frames of the series of frames captured by the audience sensors **112** is directed towards the location of the moving object in one or more corresponding frames of the series of frames captured by the object sensors **122.**

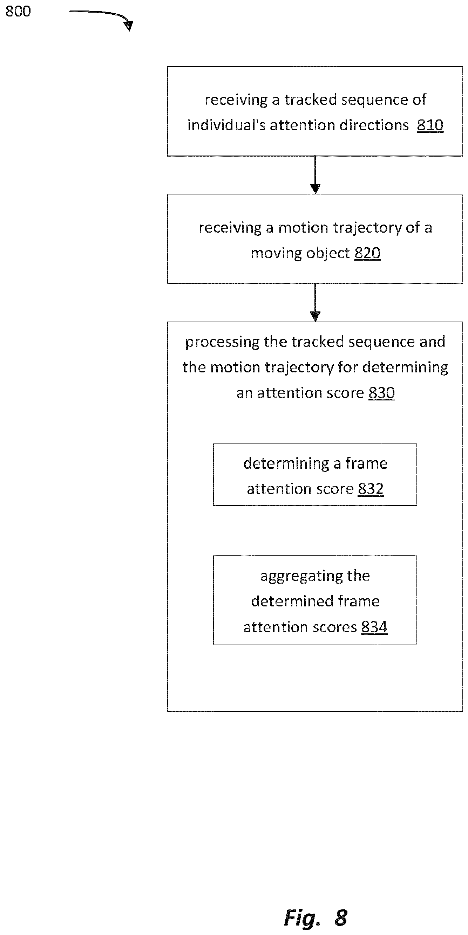

In some cases, an attention score relates to a certain aspect of the moving object. For example, such as the front or back of the outfit of the model, in the example of a fashion show, and a model as a moving object on a runway. In such cases, determining score module **250** may be configured to determine an attention score for an aspect of the moving object. The process of determining an attention score as operated, e.g. by determining score module **250,** is further elaborated below with reference to Fig. **8****.**

In some cases, once the direction of attention of an audience individual in a series of frames may be determined, updating module **240** can update the corresponding 'Attention' fields in the tracked sequence **162** associated with the individual, as illustrated in Fig. **3****.**

In cases where more than one face may be detected by detecting module **220** in the data sensed from audience sensors **112,** determining score module **250** may be configured to receive more than one tracked sequence, wherein each tracked sequence may be indicative of a direction of attention of a corresponding audience individual associated with each detected face. Determining score module **250** may be further configured to receive a motion trajectory of a moving object, and to determine a respective attention score of each audience individual towards the moving object.

In some cases, aggregating module **260** may be configured to aggregate several determined attention scores of several audience individuals to obtain an audience attention score towards a moving object. Further details of obtaining an audience attention score are further elaborated below with respect to Fig. **8****.**

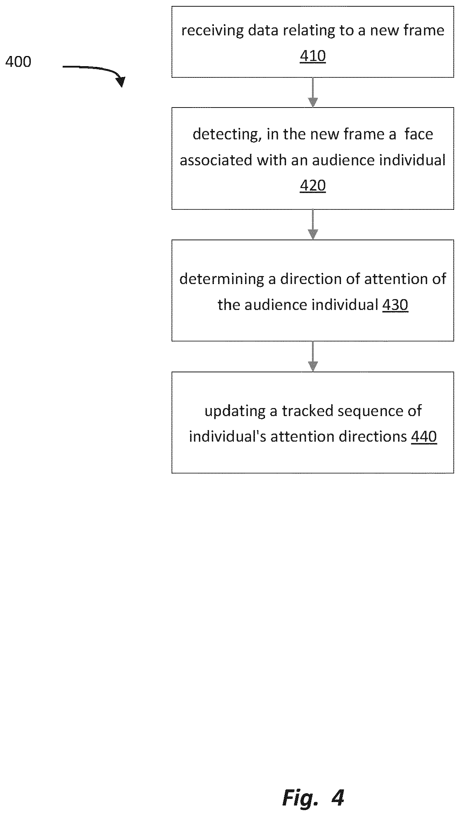

In some cases, computing device **140** may be configured to determine an attention score of one or more audience individuals in a single frame, without receiving a tracked sequence of individual's attention directions. In such cases, in response to receiving a frame, detecting module **220** can detect a face associated with an audience individual in the frame, where the frame may be associated with a first time tag. Once a face may be detected, determining direction module **230** can determine a direction of attention of the audience individual that may be associated with the detected face in the frame. In some examples, determining direction module **230** may be configured to obtain a head pose of the individual in the frame, where the head pose may be indicative of the direction of attention of the audience individual. The process of determining a direction of attention in a frame is further elaborated below with reference to Fig. **4****.**

In some examples, determining score module **250** may be configured to receive from determining direction module **230** the determined direction of attention of the audience individual in the frame associated with the first time tag. In addition, determining score module **250** may be configured to receive a location of a moving object, e.g., by receiving processed data sensed by object sensors **122,** where the location may be associated with a second time tag that corresponds to the first time tag. In a similar manner described above with respect to time intervals, time tags would be considered as corresponding to each other, if both time tags include a specific given time which was captured by both sensors, e.g. audience sensors **112** and object sensors **122.**

In some cases, determining score module **250** can process the direction of attention and the location of the moving object for determining a frame attention score of the audience individual towards the moving object.

In some cases, the frame attention score may be dependent on whether the direction of attention of the individual is directed towards the location of the moving object. For example, if the individual's attention is directed toward the moving object, then the frame attention score can be determined to be high, and vice versa. The process of determining an attention score as operated, e.g. by determining score module **250,** is further elaborated below with reference to Fig. **8****.** In some cases, once a frame attention score may be determined, updating module **240** may be configured to store the determined frame attention score, e.g. in a record illustrated in Fig. **3****.**

In some examples, determining score module **250** may be configured to determine a frame attention score for an aspect of the moving object. The process of determining an attention score as operated, e.g. by determining score module **250,** is further elaborated below with reference to Fig. **8****.**

In some cases, the data sensed from audience sensors **112** includes a series of frames, associated with a certain time interval. In such cases, computing device **140** can repeat the steps executed in a single frame for determining a frame attention score, in a selected subset of the series of frames, to obtain a series of frame attention scores of the audience individual towards the moving object. Aggregating module **260** can then aggregate the obtained series of frame attention scores to obtain an attention score of the audience individual towards the moving object. In some cases, the selected subset of the series of frames includes all frames in the series of frames.

In some cases, detecting module **220** can detect more than one face associated with more than one audience individual in a frame. In such cases, computing device **140** can repeat the steps executed in a single frame for a single detected face, for a selected subset of additional detected faces associated with additional audience individuals, in order to determine additional frame attention scores of selected additional audience individuals towards the moving object. In some cases, the selected subset of additional detected faces includes all additional detected faces.

Aggregating module **260** can then aggregate all determined frame attention scores, to obtain an audience frame attention score, i.e. the attention score of audience individuals in a single frame, towards the moving object.

As described above, aggregating module **260** can aggregate a series of frame attention scores determined by detecting module **220,** to obtain an attention score of an audience individual towards the moving object. In some cases, aggregating module **260** can aggregate several attention scores of several audience individuals, to obtain an audience attention score.

As described above with reference to **Figs. 1****,** **2** **and** **3****,** the processor **142** can be configured to execute several functional modules in accordance with computer-readable instructions implemented on a non-transitory computer-readable storage medium, such as memory **160.** Such functional modules are referred to hereinafter as comprised in the processor **142.** Processor **142** can comprise e.g. the modules described with reference to attention detection framework **150.**

It should be noted that the teachings of the presently disclosed subject matter are not bound by environment **100** and computing device **140** described with reference to **Figs. 1-3****.** Equivalent and/or modified functionality can be consolidated or divided in another manner and can be implemented in any appropriate combination of software with firmware and/or hardware and executed on a suitable device. Those skilled in the art will also readily appreciate that the data repository, such as memory **160,** can be consolidated or divided in other manner, and that databases can be shared with other systems or be provided by other systems, including third party equipment. In addition, computing device **140** can be divided in a different manner including different modules than those described with respect to **Figs. 1-3****.**

Referring now to **Fig. 4****,** there is illustrated a generalized flow-chart **400** of operations carried out in order to update a tracked sequence of individual's attention directions in accordance with certain embodiments of the presently disclosed subject matter. Operations described with reference to Fig. **4** can be performed for example by computing device **140.**

In some cases, data relating to a new frame may be received, e.g. by computing device **140** using detecting module **220** (block **410**). A face associated with an audience individual can be detected in the new frame (block **420**). In some examples, more than one face associated with more than one audience individual can be detected in a single frame. The process of detecting a face in a new frame is further elaborated in Fig. **5****.**

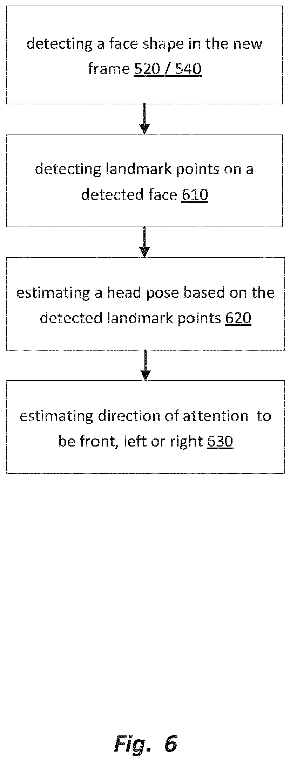

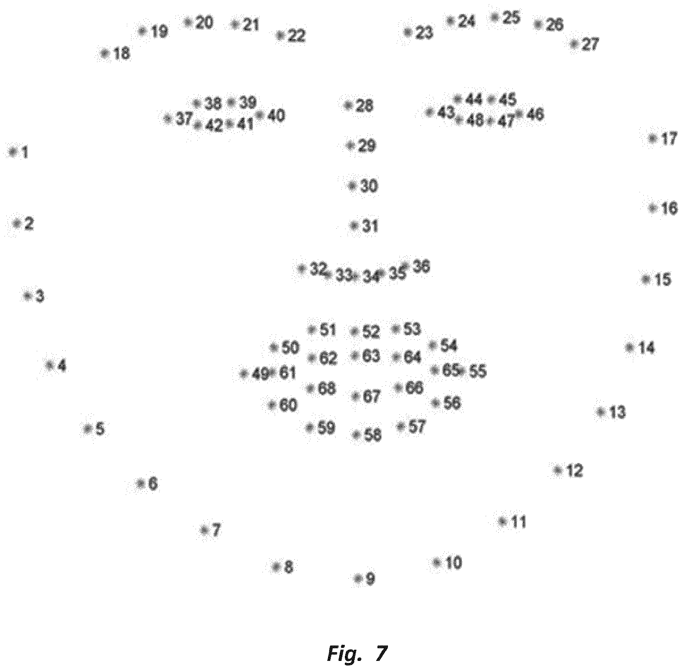

Once a face is detected in the new frame, a direction of attention of the audience individual associated with the detected face may be determined (block **430**), e.g. using determining direction module **230** illustrated in Fig. **2****.** The process of determining a direction of attention is further elaborated in Figs. **6** and **7****.**

The process now proceeds to block **440** where a tracked sequence of individual's attention directions may be updated to include indication of the direction of attention of audience individual in the new frame, e.g. using updating module **240** illustrated in Fig. **2****.** As explained above with reference to Fig. **2****,** once a tracked sequence of individual's attention directions may be updated, computing device **140** may be configured to receive the tracked sequence and a motion trajectory of a moving object, and to determine an attention score of an audience individual towards the moving object. The process of determining an attention score is further elaborated in Fig. **8** below.

Reference is now made to Fig. **5****,** where the process of detection of a face in a new frame is elaborated (block **420** in Fig. **4**). In some cases, a new frame may be received. A face shape may be detected and then the tracked sequence associated with the detected face shape may be updated to include any determined indication of the direction of attention of the individual associated with the face. However, in some other cases, an audience individual that was detected in other frames, e.g. in previous frames, may be tracked from one frame to another. In such cases, when a new frame is received, data relating to an estimated location of the tracked individual may also be received. The estimated location indicates an estimated location of an individual associated with a face that was previously detected in other frames, and the location where this individual should be detected in the new frame. Based on received estimated location, the process proceeds to detect a face in the new frame in the estimated location. If a shape of a face is indeed detected in the new frame, the process proceeds to determine whether the position of the detected face shape in the new frame is within a predetermined divergence threshold from the position of the previously detected face. If the position of the detected face shape is indeed within a predetermined divergence threshold, then it can be assumed that the tracked individual from other frames is also detected in the new frame, i.e. recognizing a correspondence between the face shape detected in the new frame and the previously detected face. The process then proceeds to determine a direction of attention of the individual associated with the detected face and updates the tracked sequence associated with the detected face which is the same tracked sequence of the tracked individual.

However, in some cases where a face is not detected in the new frame in the estimated location, it is assumed that the individual may probably be looking up or down, e.g. looking at a mobile phone, or looking to the extreme left or right, e.g. to talk with a neighbouring audience individual, and thus a face is not detected. In such cases, the direction of attention may be determined to indicate a failure of direction of attention, i.e., that there is no attention of the individual in that frame. The process then proceeds to update the tracked sequence associated with the previously detected face, to indicate a failure of direction of attention of the at least one audience individual in the new frame.

Referring to Fig. **5** illustrating the above, data relating to a new frame may be received (block **410** of Fig. **4**). If identification mode is off (block **510**), i.e. no track of an individual from other frames is required, and the process continues to detect a face shape in the new frame (block **520**). In a non-limiting example, as known in the art, detection can be done using an SVM model trained using HOG features, extracted from a large number of faces, however, other known methods for detecting a face shape in a frame can be used. A face that may be detected in a frame may be associated with an audience individual. In some cases, more than one face shape is detected, where each face shape may be associated with an audience individual. Once a face shape is detected, a direction of attention of the audience individual may then be determined in the new frame (block **430** illustrated in Fig. **4**), and the tracked sequence associated with the detected face may then be updated to include indication of the direction of attention of the audience individual in the new frame (block **440** illustrated in Fig. **4**).

If, however, identification mode is on (block **510**), i.e. a track of an individual from other frames is required, then data relating to an estimated location of a face in the new frame may be received (block **530**). The estimated location may be indicative of a position of a previously detected face in another frame, e.g. an audience individual that was detected in other frames that is tracked from one frame to another. The process continues to detect a face shape in the new frame (block **540**). If a face shape is detected in the new frame, the process proceeds to determine whether the position of the detected face shape in the new frame is within a predetermined divergence threshold from the position of the previously detected face (block **550**). If the position of the detected face shape is within a predetermined divergence threshold, a correspondence between the detected faces is recognized (block **560**). In some cases, the recognized correspondence indicates that the individual that was tracked from one frame to another was also detected in the new frame. A person versed in the art would realize that other methods of determining a correspondence between a previously detected face and a face detected in the new frame exists, and that the subject matter should not be limited to comparison of positions in several frames. For example, correspondence may be identified based on orientation and/or position of a detected face in a previous frame.

Once a correspondence is recognized, the process then continues in a similar way to that of block **520** to determine a direction of attention of the audience individual in the new frame, which is the tracked individual, and update its tracked sequence (blocks **430** and **440** illustrated in Fig. **4**).

However, in some cases, data relating to an estimated location is received, and no face shape is detected in the new frame, i.e. there is a failure to detect a face shape in the estimated location. In these cases, the tracked sequence associated with the previously detected face may be updated to indicate a failure of direction of attention of the audience individual in the new frame (block **430** of Fig. **4**). The updated tracked sequence, now including the indication of no attention in the new frame, and the motion trajectory, are then processed for determining an attention score of the audience individual towards the moving object (block **440** of Fig. **4**).

As described above, once a face is detected, either in block **520** of Fig. **5** or in block 540 of Fig. 5 through block 560, a direction of attention of the detected face may be determined (block **430**). Reference is now made to Fig **6** illustrating a non-limiting example of determining a direction of attention of a face of an audience individual. Operations described with reference to Fig. **6** can be performed for example by computing device **140,** e.g. using determining direction module **230.** A person versed in the art would realize that other known methods can be used for each step of determining the direction of attention.

As illustrated in Fig. **6****,** once a face is detected (blocks **520** or **540** of Fig. **5**), landmark points are detected on the face (block **610**). Fig. **7** illustrates an exemplary detection of **68** points on a face using known methods. Referring back to Fig. **6****,** at block **620,** a head pose, e.g. front, left, right, may be estimated based on the detected landmark points. In order to estimate a head pose, the symmetry of the face may be detected. For example, symmetry between the landmark points can be indicative that the person may be looking in a front direction. In order to estimate the symmetry of the landmark points, the following stages are executed:
1) Calculating a sum of distance between points on right eyebrow (e.g. points **18** to **22** illustrated in Fig. **7**) to the points on the right border of the face (e.g. points **1** to **5** illustrated in Fig. **7**). Adding to it a sum of distance between points on the nose to the points on the right border of the face;
2) Calculating a total distance for the left side of face in a similar manner to that described in stage (**1**);
3) Calculating a distance ratio i.e. a ratio between total distance of right side to the total distance of left side.

It should be noted that other stages can be executed for estimating the symmetry of the landmark points.

Based on the distance ratio, a direction of attention to be front, right or left may be estimated (block **630**). For example, if the distance ratio is close to the value of **1,** e.g. 0.66 to 1.5, then a person may substantially be looking to the front direction. If a distance ratio is greater than 1.5, then a person may substantially be looking to his left direction. If distance ratio is less than 0.66, then a person may substantially be looking to his left direction.

In some cases, if the direction of attention is determined to be a front direction, then a further check may be applied to detect if there is a roll of the head. In such cases, the angle between vertical lines joining all the points on the nose, and the vertical axis of the image, is calculated. If there is face roll, then this angle is close to 0 degrees. If absolute value of this angle is more than a threshold, e.g. 20 degrees (i.e. estimated angle is NOT between -20 degrees to 20 degrees), then a case of head roll is determined to occur. Based on the value of estimated angle, it is possible to determine if a person is looking to the right, or to the left. In some cases, if a person rolls his head to his right, then he is probably looking in his left direction, and vice versa. Image resolution is not suitable to estimate gaze direction based on eye tracking, because this estimation is to be done for groups of audiences captured by a camera. In this way, estimated attention direction is corrected in case of head roll. In some cases, this correction is not done if a person is detected to be looking to the right or left direction, based on face symmetry.

In some cases, a direction of attention of an individual can be classified by using general directions indications such 'front', 'right' or 'left'. Additionally or alternatively, the direction of attention can be classified in a more specific manner, such as by angles or ranges of angles based on estimated distance ratio and roll angle. A person versed in the art would realize that other classifications can be used for indicating the direction of attention of an individual.

As described above, in some cases, for each detected face associated with an audience individual, a tracked sequence of individual's attention directions may be generated and stored. An example of such a tracked sequence is illustrated in Fig. **3** by tracked sequences **162** stored in memory **160.** As described above, the tracked sequence may be indicative of a direction of attention of an audience individual in each frame of a series of frames, or a subset thereof. Referring now back to Fig. **4****,** once a direction of attention of the audience individual in the new frame is determined at block **430,** the tracked sequence of individual's attention directions can be updated to include the determined direction of attention in the new frame (block **440**). For example, updating module 240 illustrated in Fig. 2 can update the 'Direction' field of Record 1 associated with the audience individual 1, as exemplified in Fig. 3.

Fig. 8 illustrates a generalized flow-chart of operations carried out in order to detect audience attention in accordance with certain embodiments of the presently disclosed subject matter. Operations described with reference to Fig. 8 can be performed for example by computing device 140, e.g. using determining score module 250.

As described above, a tracked sequence of individual's attention directions can be updated to include indication of the direction of attention of the audience individual in a new frame. In some cases, the tracked sequence of individual's attention directions can be received (block **810**), e.g. by determining score module **250.** The tracked sequence may be indicative of a direction of attention of an audience individual in each frame of a subset of a series of frames where the series of frames may be associated with a certain time interval. In some examples, more than one tracked sequence can be received, where each tracked sequence may be indicative of a direction of attention of an audience individual.

In some cases, a motion trajectory of a moving object can also be received, e.g. by determining score module **280** (block **820**). In some examples, determining score module **280** can receive processed data sensed from object sensors **112** including the motion trajectory. The motion trajectory of a moving object is indicative of a location of the moving object e.g. in the scene area **120,** in each frame of a certain series of frames in a corresponding time interval to the time interval of the tracked sequence.

The received tracked sequence and the received motion trajectory can be processed for determining an attention score of the audience individual towards the moving object (block **830**), e.g. by determining score module **250** illustrated in Fig. **2****.**

In some examples, the attention score may be dependent on whether the direction of attention of the individual in one or more frames of a first series of frames captured by the audience sensors **112** is directed towards the location of the moving object in one or more frames of a second series of frames captured by the object sensors **122.** For example, if the individual's attention is directed towards the moving object, then the attention score can be determined to be positive, and vice versa.

In some cases, in order to determine a frame attention score, for each frame of the tracked sequence, a frame attention score may be determined (block **832** included in block **830**).

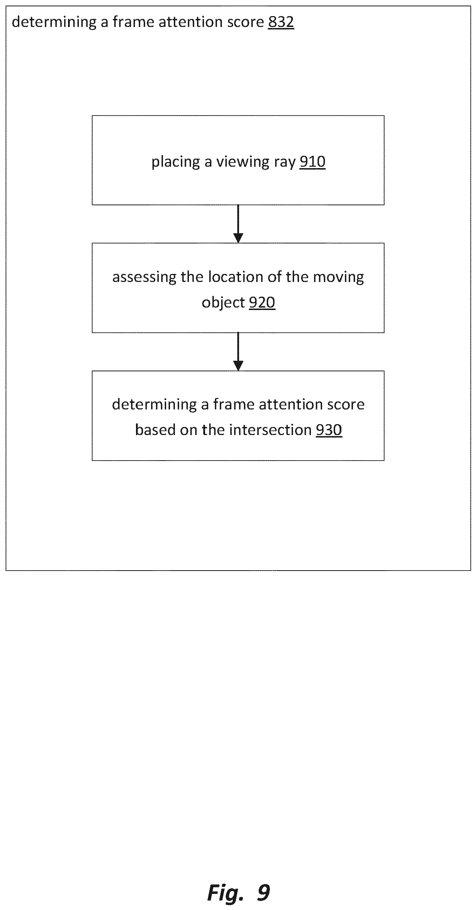

Reference is now made to Fig. **9** illustrating an example of a process of determining a frame attention score. In some cases, in order to determine a frame attention score, a viewing ray of the audience individual, based on the direction of attention of the individual in the frame, may be placed (block **910**). In addition, for each corresponding frame of the motion trajectory, the location of the moving object may be assessed (block **920**). For this purpose, a frame in a tracked sequence would be considered as corresponding to a frame in the motion trajectory, if both frames were taken at the same given time. Once a viewing ray is placed, and the location of the moving object in the corresponding frame is assessed, based on intersection of the viewing ray with the location of the moving object, a frame attention score, i.e. whether the direction of attention of the individual is directed towards the object in that frame, may be determined (block **930**). For example, if the viewing ray of the individual substantially intersects with the location of the moving object, then determining score module **250** can determine that the frame attention score to the moving object may be positive. A person versed in the art would realize that 'substantially intersects' should be interpreted in a broad manner. For example, a deviation of the viewing ray from the exact location of the moving object, which does not exceed a certain threshold, would be considered as a direction of attention that is directed towards the moving object.

In some examples, frame attention score can be a value, e.g. a value representing a deviation of the viewing ray from the location of the moving object. A person versed in the art would realize that other values representing the direction of attention can be used, such as gaze direction, and other contextual elements like e.g. holding a phone up, closing the eyes, etc.

It should be noted throughout the description that the term *object* should be interpreted in a broad manner to include also a part of an object. For example, an object can be a part of an outfit of a model on a runway, such as the lower part of the outfit, where the upper part would be considered as another object. In such examples, direction of attention of the individual can be determined for each part of the outfit, and/or to objects which are connected or correlated to each other. In some examples, determining the attention towards different objects in a scene (e.g. different athletes in a sports game) is done. The attention towards a specific object or specific object part can be calculated by correlating the position and attention direction from persons in the audience with the locations and movements of the specific objects and object parts. Thereby, specific people in the audience can be weighted differently to obtain the final attention score towards an object and an object part. In specific cases, attention can even be determined for individual persons in the audience e.g. in case their attention is of special interest, such as a coach in a sports game.

In some cases, additional position information can be received and used when processing the tracked sequence and the motion trajectory for determining an attention score (block **930**). In some examples, the additional position information may relate to either or both the angles of view of the audience cameras or object cameras, in order to calibrate the angles of view of the cameras to each other. Additional examples of additional position information include information on direction of start and end of scene (for example, a runway in a fashion show has a beginning and an end), audience area is to the right/left of the scene, and overall length and size of the areas in the event. In some examples, additional position information relating to the moving object can be used, such as in a fashion show, by considering a FIFO (first in first out) rule for models entering a runway. Such a rule can be used e.g. to better determine the attention score for each model, or to determine the aspect of the object that the individual's attention may be directed towards. For example, if a model has just entered the runway, and the individual's attention was determined to be directed towards the moving object, then it can also be determined that the individual's attention may be to the front side of the outfit, whereas if a model has already turned and is leaving the runway, the individual's attention is directed towards the back of the outfit. Other examples of additional position information can be used.

In some cases, once a frame attention score has been determined (block **832**), the frame attention score can be updated. For example, updating module **240** illustrated in Fig. **2** can update the determined frame attention score in an 'Attention' field of a certain frame in the record **162** illustrated in Fig. **3****.**

Referring back to Fig. **8****,** once several frame attention scores are determined for a series of frames, the frame attention scores can be aggregated, e.g. by aggregating module **260,** to a determine an attention score of an individual towards a moving object (block **834**).

In some cases, there is more than one moving object in the scene area **120** and the data sensed from object sensors **112** may be processed to include more than one motion trajectory of more than one moving object. Each motion trajectory may be indicative of a location of one moving object in each frame of the series of frames captured by the object sensors **112,** or a subset of that series. In such cases, the tracked sequence and each motion trajectory of each moving object can be processed separately, for determining an attention score of the audience individual towards each moving object. Determining the frame attention score as described above, based on the location of each moving object in each moving trajectory, would be indicative of the exact moving object that the attention of the individual may be directed to. As detailed above, in some cases, additional position information can be received and used when processing the tracked sequence and the motion trajectory, for determining an attention score towards a certain object. In such cases of more than one moving object in the scene area **120,** attention directed towards a certain object may be indicative of non-attention to another object in the scene area.

In cases where more than one face is detected e.g. by detecting module **220** in the data sensed from audience sensors **112,** an audience attention score can be determined. For each additional individual, an additional attention score can be determined, by processing the additional tracked sequence of additional individuals and the motion trajectory. The additional determined attention scores of the individuals can then be aggregated, e.g. by aggregating module **260** illustrated in Fig. **2****,** to obtain an audience attention score. In some cases, audience attention score can be aggregated in a complex manner, while considering one or more criteria. For example, different weighing factors can be given to certain audience individuals located in a certain location in the audience area. Additionally, higher weighing factors can be given to attention scores obtained at a specific time of the event. Other examples exist for determining an audience attention score.

As explained above, in some cases, an attention score of one or more audience individuals in a single frame can be determined, without receiving a tracked sequence of an individual's attention directions.

In such cases, each frame may be processed separately, to detect a frame attention score, based on a direction of attention of the individual associated with a detected face, and the assessed location of a moving object in a corresponding frame.

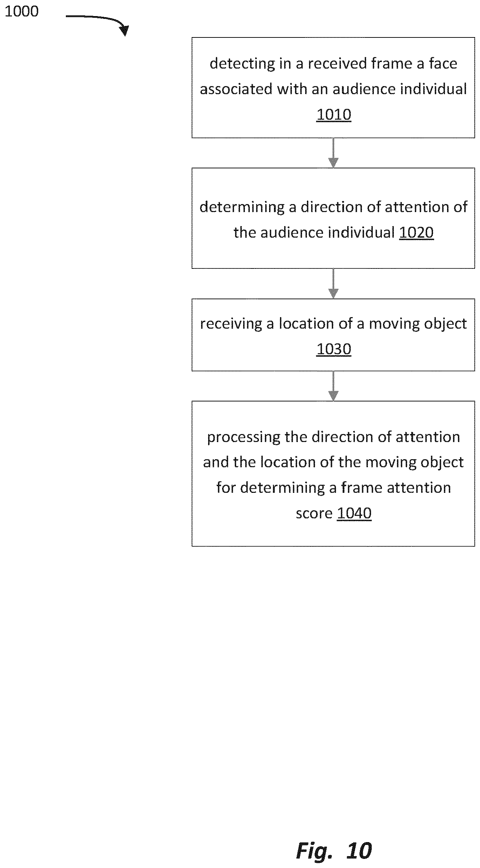

Referring now to **Fig. 10****,** there is illustrated a generalized flow-chart **1000** of operations carried out in order to determine a frame attention score of an audience individual in accordance with certain embodiments of the presently disclosed subject matter. Operations described with reference to Fig. **10** can be performed for example by computing device **140.**

In some cases, a face associated with an audience individual may be detected in a received frame (block **1010**). The frame may be associated with a first time tag. Once a face is detected, a direction of attention of the audience individual can be determined (block **1020**). In some examples, a head pose of the individual in the frame may be obtained, where the head pose may be indicative of the direction of attention of the audience individual.

In addition, a location of a moving object may be received, e.g., by receiving processed data sensed by object sensors **122,** where the location may be associated with a second time tag that corresponds to the first time tag. In a similar manner described above with respect to time intervals, time tags would be considered as corresponding to each other, if both time tags include a specific given time which was captured by both sensors, e.g. audience sensors **112** and object sensors **122.**

The direction of attention and the location of the moving object can then be processed for determining a frame attention score of the audience individual towards the moving object. In some cases, the frame attention score may be dependent on whether the direction of attention of the individual is directed towards the location of the moving object. For example, if the individual's attention is directed toward the moving object, then the frame attention score can be determined to be high, and vice versa.

It should be noted that the description illustrated in in Figs. **4-9** for the purpose of detecting a face in a frame, determining a direction of attention in a frame and determining an attention score in a frame, may also be relevant in the case of determining an attention score in a frame, without receiving a tracked sequence of individual's attention directions as illustrated in Fig. 10. Likewise, the description illustrated in in Figs. **4-9** to obtain an audience attention score may also be relevant in the case of determining an attention score in a frame, without receiving a tracked sequence of individual's attention directions as illustrated in Fig. 10.

While operations disclosed with reference to Figs. **4-10** are described with reference to elements in Figs. **2-3****,** this is done by way of example only and should not be construed as limiting, and it is noted that alternative system designs preserving the same functional principles are likewise contemplated.

It should be noted that the teachings of the presently disclosed subject matter are not bound by the flow charts illustrated in **Figs 4-10****,** and that the illustrated operations can occur out of the illustrated order. For example, operations **810** and **820** and **1010** and **1030** shown in succession, can be executed substantially concurrently, or in the reverse order. It is also noted that whilst the flow charts are described with reference to elements of environment **100** and computing device **140,** this is by no means binding, and the operations can be performed by elements other than those described herein.

It should be understood that the invention is not limited in its application to the details set forth in the description contained herein or illustrated in the drawings. The invention may be capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

## Claims

1. A computerized method for determining attention of at least one audience individual, the method comprising:
receiving at least one tracked sequence of an individual's attention directions, the at least one tracked sequence being indicative of a direction of attention of the at least one audience individual in each frame of a subset of a first series of frames, the first series of frames being associated with a first time interval;
receiving a motion trajectory of a moving object, the motion trajectory being indicative of a location of the moving object in each frame of a second subset of a second series of frames, the second series of frames being associated with a second time interval that corresponds to the first time interval; and
processing the tracked sequence and the motion trajectory for determining an attention score of the at least one audience individual towards the moving object.

2. The computerized method of claim **1,** the method further comprising:
receiving data relating to a new frame;
detecting, in the new frame at least one face associated with at least one audience individual;
determining a direction of attention of the at least one audience individual in the new frame;
updating the at least one tracked sequence associated with the detected face to include indication of the determined direction of attention; and
processing the updated tracked sequence and the motion trajectory for determining an attention score of the at least one audience individual towards the moving object.

3. The computerized method of claim **1,** wherein the attention score is dependent on whether the direction of attention in one or more frames of the first series of frames is directed towards the location of the moving object in one or more corresponding frames of the second series of frames, and wherein
determining the attention score of the at least one audience individual towards
the moving object further comprises:
for each frame of the first series of frames, determining one or more frame attention scores; and
aggregating the determined one or more frame attention scores to determine the attention score.

4. The method of claim **1,** further comprising:
receiving at least one additional tracked sequence of at least one additional individual's attention directions, the at least one tracked sequence being indicative of a direction of attention of the at least one additional audience individual in each frame of the subset of the first series of the frames;
processing the additional tracked sequence and the motion trajectory for determining at least one additional attention score of the at least one audience individual towards the moving object; and
aggregating the determined attention scores of the audience individuals to obtain an audience attention score.

5. The computerized method of claim **1,** wherein the first series of frames is received from at least one audience camera and wherein the second series of frames is obtained from at least one camera, the at least one camera is calibrated to the at least one audience camera to determine relative position of each other.

6. The computerized method of claim **2,** wherein the determining the direction of the attention of the audience individual in the new frame includes:
obtaining a head pose of the audience individual, the head pose being indicative of the attention of the audience individual.

7. The computerized method of claim **2,** wherein the detecting, in the new frame of at least one face, includes:
receiving data relating to an estimated location of at least one face in the new frame, the estimated location is indicative of a position of a previously detected face in another frame;
in response to detecting a face shape in the new frame based on the estimated location, determining whether a position of the detected face shape is within a predetermined divergence threshold from the position of the previously detected face;
if the position of the detected face shape is within the predetermined divergence threshold, recognizing a correspondence between the detected face shape and the previously detected face and determining the direction of attention of the at least one audience individual in the new frame.

8. A computerized method for determining a frame attention score of at least one audience individual, the method comprising:
e) detecting, in a received frame, at least one face associated with at least one audience individual, wherein the frame is associated with a first time tag;
f) determining a direction of attention of the at least one audience individual that is associated with the detected face in the frame;
g) receiving a location of a moving object, the location being associated with a second time tag that corresponds to the first time tag;
h) processing the direction of attention and the location of the moving object for determining a frame attention score of the at least one audience individual towards the moving object.

9. The computerized method of claim **8,** wherein the frame attention score is dependent on whether the direction of attention is directed towards the location of the moving object.

10. The computerized method of claim **8,** the method further comprising:
repeating steps (a) to (d) for at least one additional face associated with at least one additional audience individual detected in the frame to determine at least one additional frame attention score of the at least one additional audience individual towards the moving object, and
aggregating the determined frame attention score and the at least one additional frame attention score to obtain an audience frame attention score towards the moving object.

11. The computerized method of claim **8,** wherein the frame is received from at least one audience camera and wherein the location of the moving object is obtained from at least one object camera, the at least one object camera being calibrated to the at least one audience camera to determine relative position of each other.

12. The computerized method of claim **8,** wherein determining the direction of the attention of the audience individual in the frame includes:
obtaining a head pose of the audience individual, the head pose being indicative of the attention of the audience individual.

13. A computerized system for determining attention of at least one audience individual, the system comprising:
one or more processors; and
a memory coupled to the one or more processors and storing program instructions that, when executed by the one or more processors, cause the one or more processors to at least:
receive at least one tracked sequence of individual's attention directions, the at least one tracked sequence being indicative of a direction of attention of the at least one audience individual in each frame of a subset of a first series of frames, the first series of frames being associated with a first time interval;
receive a motion trajectory of a moving object, the motion trajectory being indicative of a location of the moving object in each frame of a second subset of a second series of frames, the second series of frames being associated with a second time interval that corresponds to the first time interval; and
process the tracked sequence and the motion trajectory for determining an attention score of the at least one audience individual towards the moving object.

14. A computerized system for determining attention of at least one audience individual, the system comprising:
one or more audience sensors configured for capturing one or more faces of one or more individuals of the audience;
one or more object sensors configured for capturing movement of one or more moving objects;
a computing device comprising:
a detecting module configured to receive data relating to a new frame from the one or more audience sensors and to detect in the new frame at least one face associated with at least one audience individual;
a determining direction module configured to determine a direction of attention of the at least one audience individual that is associated with the detected face in the new frame;
an updating module configured to update the at least one tracked sequence associated with the detected face to include indication of the direction of attention of the at least one audience individual in the new frame;
a determining score module configured to process the updated tracked sequence and the motion trajectory for determining an attention score of the at least one audience individual towards the moving object.

15. A computerized computer program product comprising a computer useable medium having computer readable program code embodied therein for determining attention of at least one audience individual, the computer program product comprising:
computer readable program code for causing the computer to receive at least one tracked sequence of an individual's attention directions, the at least one tracked sequence being indicative of a direction of attention of the at least one audience individual in each frame of a subset of a first series of frames, the first series of frames being associated with a first time interval;
computer readable program code for causing the computer to receive a motion trajectory of a moving object, the motion trajectory being indicative of a location of the moving object in each frame of a second subset of a second series of frames, the second series of frames being associated with a second time interval that corresponds to the first time interval; and
computer readable program code for causing the computer to process the tracked sequence and the motion trajectory for determining an attention score of the at least one audience individual towards the moving object.
